# EUROPÄISCHE PATENTSCHRIFT

(11) **EP 0 758 344 B1**
(45) Veröffentlichungstag und Bekanntmachung des Hinweises auf die Patenterteilung: **28.01.1998**
(21) Anmeldenummer: 95912254.0
(22) Anmeldetag: 20.03.1995
(51) Int. Cl.: C08F 8/12

(54) **VERFAHREN ZUR HERSTELLUNG VON LAGERSTABILEN WÄSSRIGEN LÖSUNGEN VON VINYLAMIN-EINHEITEN ENTHALTENDEN POLYMERISATEN UND IHRE VERWENDUNG**
PROCESS FOR PRODUCING LONG-SHELF-LIFE AQUEOUS SOLUTIONS OF VINYL-AMINE-UNIT-CONTAINING POLYMERS AND USE OF SUCH SOLUTIONS
PROCEDE DE PREPARATION DE SOLUTIONS AQUEUSES DE LONGUE CONSERVATION DE POLYMERES CONTENANT DES UNITES VINYLE-AMINE, ET UTILISATION DE TELLES SOLUTIONS

(30) Priorität: 31.03.1994 DE 4411311
(43) Veröffentlichungstag der Anmeldung: 19.02.1997
(73) Patentinhaber: BASF AKTIENGESELLSCHAFT, 67056 Ludwigshafen (DE)
(72) Erfinder: NILZ, Claudia, D-67127 Rödersheim-Gronau (DE); WINTER, Manfred, D-67596 Dittelsheim-He loch (DE); KRÖNER, Michael, D-68309 Mannheim (DE); STANGE, Andreas, D-68199 Mannheim (DE); SCHUHMACHER, Rudolf, D-67459 Böhl-Iggelheim (DE)
(86) Internationale Anmeldenummer: EP9501030
(87) Internationale Veröffentlichungsnummer: WO9526989

(56) Entgegenhaltungen:
- EP-A- 0 185 935
- EP-A- 0 216 387
- EP-A- 0 331 044
- EP-A- 0 339 371
- DE-A- 1 720 737
- CHEMICAL ABSTRACTS, vol. 107, no. 12, September 1987, Columbus, Ohio, US; abstract no. 97335b, 'WATER-SOLUBLE POLYMER MANUFACTURE' Seite 14 ;Spalte 2 ; & JP,A,62 062 802 (MITSUBISHI CHEMICAL INDUSTRIES CO., LTD.) 19. März 1987
- CHEMICAL ABSTRACTS, vol. 116, no. 10, 9. März 1992, Columbus, Ohio, US; abstract no. 84478m, 'PREPARATION OF VINYLAMINE UNIT-CONTAINING WATER-SOLUBLE POLYMERS WITHOUT COALESCENCE' Seite 21 ; & JP,A,03 190 908 (MITSUBISHI KASEI CORP.) 20. August 1991

## Beschreibung

Die Erfindung betrifft ein Verfahren zur Herstellung von lagerstabilen wäßrigen Lösungen von Vinylamin-Einheiten enthaltenden Polymerisaten durch Hydrolyse von N-Vinylcarbonamid-Einheiten enthaltenden Polymerisaten mit Säuren in wäßrigem Medium und Entfernen der aus den Polymerisaten abgespaltenen Carbonsäuren aus der wäßrigen Polymerisatlösung und Verwendung der wäßrigen Polymerisatlösungen als Trocken- und Naßverfestigungsmittel bei der Herstellung von Papier.

Aus der EP-B-0 071 050 sind lineare, basische Polymerisate bekannt, die Vinylamin- und Vinylformamid-Einheiten enthalten. Die Polymerisate werden durch Homopolymerisation von N-Vinylformamid und anschließende partielle Abspaltung von Formylgruppen aus den Polymerisaten mit Säuren oder Basen hergestellt. Als Nebenprodukt der Hydrolyse entsteht Ameisensäure aus den abgespaltenen Formylgruppen. Ameisensäure kann jedoch nicht allein aus der wäßrigen Polymerlösung abdestilliert werden. Das Ameisensäure-Wasser-Azeotrop siedet bei 107°.

Die Polymerisate können auch in Alkoholen mit Säuren solvolysiert werden. Die Nebenprodukte der Solvolyse, d.h. Ameisensäureester, können während oder nach der Hydrolyse aus dem System entfernt werden, z.B. durch Destillation. Da die Destillation jedoch nach dem Stand der Technik in Gegenwart von Alkoholen und z.B. Salzsäure durchgeführt wird, entstehen dabei beträchtliche Mengen an Alkylchloriden.

Aus der EP-B-0 216 387 ist die Verwendung von Vinylamin-Einheiten einpolymerisiert enthaltenden partiell hydrolysierten Copolymerisaten aus N-Vinylformamid und monoethylenisch ungesättigten Monomeren aus der Gruppe Vinylacetat, Vinylpropionat, der C₁ - bis C₄-Alkylvinylether, N-Vinylpyrrolidon, der Ester, Nitrile und Amide von Acrylsäure und Methacrylsäure bekannt.

Aus der DE-A-17 20 737 ist ein Verfahren zur Herstellung von basischen Polymerisaten bekannt, bei dem man Homo- bzw. Copolymerisate von N-Vinyl-N-Methylcabonsäureamiden bei erhöhter Temperatur einer sauren Hydrolyse unterwirft. Dabei entsteht Ameisensäure, die auf destillativem Wege entfernt wird. Man kann jedoch auch vor oder im Laufe der Verseifung Methanol zusetzen und die abgespaltene Ameisensäure zu Methylformiat verestern und so aus dem Reaktionsgemisch entfernen.

Aus der EP-A-185 935 ist ein Verfahren zur Herstellung von pulverförmigen, linearen basischen Polymerisaten, die Vinylamin-einheiten enthalten, bekannt. Hierbei läßt man auf pulverförmige Polymerisate von N-Vinylformamid in Gegenwart von höchstens 5 Gew.-% Wasser, bezogen auf das eingesetzte Polymerisat, gasförmige Halogenwasserstoffsäure einwirken. Die Abspaltung der Formylgruppe kann auch in C₁- bis C₄-Alkoholen durchgeführt werden. Man erhält pulverförmige Vinylaminpolymere und Ameisensäureester. Hierbei entstehen jedoch in unerwünschtem Maße Alkylchloride.

Aus der EP-B-0 251 182 sind Vinylamincopolymerisate bekannt, die außer Vinylamineinheiten noch N-Vinylformamid-, Acrylnitril-, Acrylamid- und gegebenenfalls Acrylsäure-Einheiten enthalten. Diese Copolymerisate werden durch Copolymerisieren von N-Vinylformamid und Acrylnitril und anschließende Modifizierung der Formylgruppen und gegebenenfalls der Nitrilgruppen der Copoly-merisate unter sauren Bedingungen hergestellt. Die Modifizierung der Formylgruppen kann in Gegenwart von Alkohol erfolgen, wobei sie in Form von Ameisensäureestern abgetrennt werden. Wenn die Modifizierung mit Salzsäure vorgenommen wird, entstehen auch hierbei Alkylchloride, die entsorgt werden müßten.

Obwohl in den oben zitierten Literaturstellen darauf hingewiesen wird, daß man die Formylgruppen von Polymerisaten des N-Vinylformamids durch Behandeln mit Säuren in Gegenwart von Alkoholen in Form von Ameisensäureestern abtrennen kann, findet man dafür kein einziges Beispiel. Die wäßrigen Polymerlösungen wurden bisher nach der Hydrolyse neutralisiert und zusammen mit den dabei gebildeten Neutralsalzen verwendet oder man isolierte die hydrolysierten Polymerisate durch Ausfällen aus der wäßrigen Lösung mit beispielsweise Aceton. Wegen der dafür notwendigen großen Mengen an Aceton, bezogen auf Polymer, ist eine solche Methode der Isolierung von Polymeren technisch unwirtschaftlich.

Wie außerdem festgestellt wurde, verlieren die in den Beispielen des Standes der Technik beschriebenen wäßrigen, Vinylamin-Einheiten sowie Carbonsäuren, insbesondere Ameisensäure enthaltenden Polymerisatlösungen bei längerer Lagerung aufgrund von Rückamidierung und damit Verminderung der kationischen Ladungsdichte des Polymeren an Wirksamkeit, d.h. solche Polymerlösungen sind nicht lagerstabil.

Der Erfindung liegt daher die Aufgabe zugrunde, ein technisch einfach durchführbares Verfahren zur Herstellung lagerstabiler wäßriger Vinylaminpolymerlösungen zur Verfügung zu stellen, wobei praktisch keine Alkylchloride und kaum Neutralsalze anfallen.

Die Aufgabe wird erfindungsgemäß mit einem Verfahren zur Herstellung lagerstabiler wäßriger Lösungen von Vinylamin-Einheiten enthaltenden Polymerisaten durch Hydrolyse von N-Vinylcarbonamid-Einheiten enthaltenden Polymerisaten mit Säuren in wäßrigem Medium und Entfernen der aus den Polymerisaten abgespaltenen Carbonsäuren aus der wäßrigen Polymerisatlösung gelöst, wenn man N-Vinylformamid-Einheiten enthaltende Polymerisate einsetzt und die abgespaltene Ameisensäure im Anschluß an die Hydrolyse durch Zugabe von mindestens stöchiometrischen Mengen mindestens eines C₁- bis C₆-Alkohols verestert und die Ester aus dem Reaktionsgemisch abdestilliert, so daß wäßrige Polymerlösungen mit einem Gehalt an Neutralsalzen von höchstens 5 Gew.-% entstehen.

Man erhält dabei stabile, salzarme, wäßrige Lösungen von Vinylamin-Einheiten aufweisenden Polymeren. Der Gehalt an Neutralsalzen, insbesondere Natriumchlorid und Natriumformiat, liegt bei diesen Lösungen unterhalb von 5 Gew.-%. Die wäßrigen Polymerlösungen können ohne signifikanten Wirkungsabfall mehrere Monate gelagert werden. Die nach der Hydrolyse aus dem Reaktionsgemisch abdestillierten Ester können z.B. bei der Synthese von N-Vinylformamid eingesetzt werden.

Unter N-Vinylcarbonamid-Einheiten enthaltenden Polymerisaten sollen Homo- und Copolymerisate von N-Vinylcarbonsäureamiden verstanden werden. Die N-Vinylcarbonsäureamide können beispielsweise mit Hilfe folgender Formel charakterisiert werden:

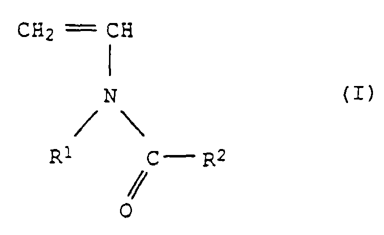

In der Formel I bedeuten R¹ und R² gleiche oder verschiedene Substituenten, und zwar H und C₁- bis C₄-Alkyl. Beispiele für Monomere der Formel I sind N-Vinylformamid, N-Vinyl-methylformamid, N-Vinylacetamid, N-Vinyl-N-methylacetamid, N-Vinyl-N-ethylacetamid, N-Vinylpropionamid, N-Vinyl-N-methylpropionamid und N-Vinyl-butyramid. Diese Monomeren können für sich allein oder auch in Mischung untereinander bei der Polymerisation verwendet werden. Aus dieser Gruppe von Monomeren wird erfindungsgemäß N-Vinylformamid eingesetzt.

Das erfindungsgemäße Verfahren hat besondere Bedeutung für die Hydrolyse von Copolymerisaten, die
(a) 5 bis 95 Mol-% N-Vinylformamid-Einheiten und
(b) 95 bis 5 Mol-% Einheiten mindestens eines Monomeren aus der Gruppe Vinylformiat, Vinylacetat, Vinylpropionat, N-Vinylpyrrolidon, Acrylsäure, Methacrylsäure, der Ester, Amide und Nitrile von Acrylsäure oder Methacrylsäure und der C₁- bis C₄-Alkylvinylether
enthalten. Solche Copolymerisate sind durch radikalische Copolymerisation von N-Vinylformamid und mindestens einem Monomer aus der Gruppe Vinylformiat, Vinylacetat, Vinylpropionat, N-Vinylpyrrolidon, Acrylsäure, Methacrylsäure, der Ester, Amide und Nitrile von Acrylsäure oder Methacrylsäure und der C₁- bis C₄-Alkylvinylether herstellbar, vgl. EP-B-0 216 387. Bei der Hydrolyse entstehen aus den N-Vinylformamid-Einheiten II der Copolymerisate Vinylamin-Einheiten III sowie zu III äquivalente Mengen an Ameisensäure

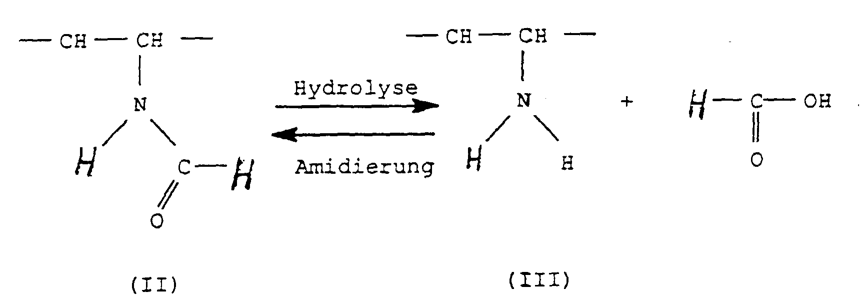

N-Vinylformamid kann außer mit den obengenannten Comonomeren noch mit einer Reihe anderer monoethylenisch ungesättigter Verbindungen copolymerisiert werden, z.B. mit anderen monoethylenisch ungesättigten Carbonsäuren wie Maleinsäure, Fumarsäure, Itaconsäure oder Ethacrylsäure, Estern der genannten Carbonsäuren mit beispielsweise 1 bis 18 C-Atomen im Molekül wie Maleinsäuremonomethylester, Maleinsäuredimethylester oder Maleinsäureisopropylester, Acrylamidomethylpropansulfonsäure, Vinylsulfonat, Vinylimidazol oder 2-Methylvinylimidazol. Die oben genannten Ester der Acrylsäure und Methacrylsäure leiten sich beispielsweise von Alkoholen mit 1 bis 18, vorzugsweise 1 bis 2 C-Atomen ab.

Für die Herstellung der Copolymerisate des N-Vinylformamids setzt man vorzugsweise Vinylacetat, Vinylpropionat, Acrylsäure, Methacrylsäure, Acrylsäuremethylester, Methacrylsäuremethylester, Acrylsäureethylester, Acrylnitril, Methacrylnitril und/oder N-Vinylpyrrolidon ein.

Die Hydrolyse der Homo- und Copolymerisate kann soweit geführt werden, daß sämtliche im Polymerisat vorhandenen Einheiten II in die Einheiten III überführt werden. In den meisten Fällen wird nur ein Teil der in den Polymerisaten vorhandenen Einheiten II hydrolysiert. Die Polymerisate enthalten dann Einheiten der Formeln II und III. Der Grad der Hydrolyse beträgt z.B. 30 bis 100, vorzugsweise 70 bis 95 Mol-%.

Die Hydrolyse erfolgt nach den im Stand der Technik beschriebenen Methoden ausschließlich in wäßriger Lösung in Gegenwart von Säuren. Als Säuren eignen sich Mineralsäuren wie Salzsäure, Schwefelsäure und Phosphorsäure oder organische Säuren wie C₁- bis C₄-Carbonsäuren, beispielsweise Ameisensäure, Essigsäure, Propionsäure oder Benzolsulfonsäure. Vorzugsweise setzt man Salzsäure ein. Die Hydrolyse kann beispielsweise bei Temperaturen von 20 bis 200, vorzugsweise 50 bis 90°C vorgenommen werden, wobei man bei Temperaturen oberhalb des Siedepunkts des Reaktionsgemisches unter Druck arbeitet. Um 1 Mol Einheiten der Formel II zu hydrolysieren benötigt man in aller Regel 1 bis 3 vorzugsweise 1,1 bis 2 Mol mindestens einer Säure. Die Hydrolyse kann diskontinuierlich oder auch kontinuierlich erfolgen.

Wie aus EP-B-0 216 387 und aus EP-B-0 251 182 bekannt ist, werden die in den Copolymerisaten enthaltenen Comonomer-Einheiten bei der Hydrolyse gegebenenfalls chemisch verändert. So entstehen beispielsweise aus Copolymerisaten von N-Vinylformamid und Vinylacetat oder Vinylpropionat bei der Hydrolyse Copolymerisate, die neben gegebenenfalls noch vorhandenen Vinylformamid-Einheiten Vinylamin-Einheiten und Vinylalkohol-Einheiten sowie gegebenenfalls nicht hydrolysierte Vinylacetat bzw. Vinylpropionat-Einheiten enthalten.

Wenn beispielsweise Acrylsäuremethylester als Comonomer eingesetzt wird, enthalten die hydrolysierten Copolymerisate neben Vinylamin- und gegebenenfalls Vinylformamid-Einheiten Acrylsäure-Einheiten. Auch Acrylnitril- und Methacrylnitril-Einheiten werden bei der Hydrolyse chemisch verändert. Hieraus entstehen z.B. Acrylamid- und Acrylsäure-Einheiten. Die bei der Hydrolyse von Copolymerisaten aus den Comonomeren entstehenden Nebenprodukte wie Essigsäure bei Vinylacetatcopolymerisaten und Methanol bei Copolymerisaten aus Vinylformamid und Acrylsäuremethylester, werden ebenfalls wie die aus den Monomeren I entstehenden Carbonsäuren aus dem wäßrigen Reaktionsgemisch mit Hilfe einer Destillation entfernt.

Erfindungsgemäß werden die aus den Einheiten II der Polymerisate abgespaltenen Carbonsäuren sowie die dabei aus gegebenenfalls in den Polymerisaten vorhandenen Vinylester-Einheiten stammenden Carbonsäuren zur Verhinderung der Rückamidierung der Einheiten III zu II im Anschluß an die Hydrolyse durch Zugabe von mindestens stöchiometrischen Mengen mindestens eines C₁- bis 06-Alkohols verestert und die Ester aus dem Reaktionsgemisch abdestilliert. Pro Mol Carbonsäure, die bei der Hydrolyse aus den Polymerisaten abgespalten wird, setzt man mindestens 1, vorzugsweise 1,5 bis 2 Mol eines Alkohols oder einer Mischung verschiedener Alkohole ein. Ein größerer Überschuß an Alkohol als vorstehend angegeben stört zwar nicht, muß jedoch destillativ abgetrennt werden. Als Alkohole eignen sich beispielsweise Methanol, Ethanol, Propanol, Isopropanol, n-Butanol, Isobutanol, tert.-Butanol, n-Pentanol, n-Hexanol und Cyclohexanol. Vorzugsweise verwendet man Methanol zur Veresterung.

Die Veresterung kann diskontinuierlich oder vorzugsweise kontinuierlich durchgeführt werden. Bei einer kontinuierlichen Arbeitsweise speist man das Reaktionsgemisch im Anschluß an die Hydrolyse und nach Zugabe mindestens eines Alkohols kontinuierlich in eine Destillationskolonne ein und entnimmt die Carbonsäureester am Kopf der Kolonne und die wäßrige Polymerlösung jeweils kontinuierlich aus dem Kolonnensumpf. Hydrolyse, Veresterung und destillative Entfernung der Ester können kontinuierlich durchgeführt werden. Die Ester können gegebenenfalls mit Hilfe von Schleppmitteln wie Benzol, Toluol oder Xylol azeotrop aus der wäßrigen Polymerlösung abdestilliert werden. Die Ester oder die daraus durch Solvolyse erhältlichen Säuren fallen in hoher Reinheit an und können wieder verwendet werden.

Man erhält lagerstabile wäßrige Lösungen von Vinylamin-Einheiten enthaltenden Polymerisaten, die nach einer gegebenenfalls vorgenommenen Neutralisation nur geringe Mengen an Neutralsalzen wie beispielsweise Natriumchlorid, aufweisen. Der Gehalt an Neutralsalzen in der wäßrigen Polymerlösung beträgt nach dem Abdestillieren der Ester und der Neutralisation höchstens 5 Gew.-%. Die hydrolysierten Polymerisate haben K-Werte (bestimmt nach H. Fikentscher an 1 gew.-%igen wäßrigen Lösungen bei 25°C und pH 7) von mindestens 10. Die K-Werte liegen üblicherweise in dem Bereich von 30 bis 120.

Die wäßrigen Polymerisatlösungen können bis zu 50 Gew.-% Polymer gelöst enthalten. Üblicherweise betragen die Polymerkonzentrationen in den wäßrigen Lösungen 4 bis 25, vorzugsweise 8 bis 18 Gew.-%. Die wäßrigen Lösungen von Vinylamin-Einheiten enthaltenden Polymeren werden als Trocken- und Naßverfestigungsmittel bei der Herstellung von Papier verwendet. Die hierfür benötigten Mengen an Polymer betragen üblicherweise 0,05 bis 5, vorzugsweise 0,2 - 3 Gew.-%, bezogen auf trockenen Faserstoff.

Die Prozentangaben in den Beispielen bedeuten Gewichtsprozent. Die K-Werte wurden nach H. Fikentscher, Cellulose-Chemie, Band 13, 58 bis 64 und 71 bis 74 (1932), in 1 gew.-%iger wäßriger Lösung bei pH 7 und 25°C bestimmt.

### Beispiele

### Beispiel 1

100 kg einer 15,5 %igen wäßrigen Lösung von Polyvinylformamid eines K-Werts von 85 werden in einem emailliertem Reaktor, der mit einem Rührer und Dosiervorrichtungen versehen ist, vorgelegt. Dann leitet man unter Rühren bei Raumtemperatur innerhalb von 2 Stunden 9,5 kg Chlorwasserstoff ein und kühlt die Reaktionsmischung, so daß die Temperatur unterhalb von 50°C gehalten wird. Danach erhitzt man den Reaktorinhalt 4 Stunden auf eine Temperatur von 70°C und läßt anschließend das Reaktionsgemisch abkühlen. Sobald es eine Temperatur von 30°C erreicht hat, wird es durch portionsweisen Zusatz von 3,0 kg 50 %iger wäßriger Natronlauge partiell neutralisiert. Hierbei stellt sich ein pH-Wert von 0,5 ein. Man erhält 112,5 kg einer Polymerlösung, die 8,5 % Ameisensäure enthält. Der Hydrolysegrad der einpolymerisierten N-Vinylformamid-Einheiten beträgt 95 Mol-%. Für die anwendungstechnische Prüfung und Bestimmung der Lagerungsstabilität wird 1 kg des nicht entsäuerten Materials mit 158 g 50 %iger Natronlauge auf pH-Wert 5 eingestellt (Polymerlösung 1).

Um die Ameisensäure aus der wäßrigen Polymerlösung zu entfernen, die das hydrolysierte Polyvinylformamid enthält, löst man darin 6,7 kg Methanol. Diese Lösung wird dann mit einer konstanten Zulaufgeschwindigkeit von 1076 g/h in die Mitte einer Glockenbodenkolonne (Höhe der Kolonne 260 cm, Durchmesser 5 cm, Anzahl der Böden 30) eingespeist. Der Rücklauf innerhalb der Kolonne, der im Idealfall 20 % des Zulaufs beträgt und damit das Temperaturprofil der Kolonne bestimmt, wird so eingestellt, daß die Sumpftemperatur nach Erreichen des stationären Zustands 100°C, die Temperatur an der Zulaufstelle 70°C und die Temperatur am Kopf der Kolonne 33°C beträgt. Am Kopf der Kolonne werden 85 g/h Ameisensäuremethylester und am Kolonnensumpf 976 g/h wäßrige Polymerlösung ausgetragen. Die wäßrige Polymerlösung enthält 0,3 Gew.-% Ameisensäure, 96,5 % der ursprünglich in der Polymerlösung vorhandenen Ameisensäure wurden in Form von Ameisensäuremethylester entfernt. Pro kg Lösung werden 47,4 g Wasser sowie 35,8 g 25 %ige Natronlauge zugesetzt, wobei sich ein pH-Wert von 5,0 einsetzt. Die entsäuerte Lösung hat einen Polymergehalt von 13,4 % und eine Viskosität von 600 mPas (Brookfield, 20°C) (Polymerlösung 2).

### Beispiel 2

100 kg einer 15,6 %igen wäßrigen Dispersion eines Copolymerisats aus 70 % N-Vinylformamid und 30 % Vinylacetat mit einem K-Wert von 100 werden in einem emailliertem Reaktor, der mit einem Rührer und Dosiervorrichtungen versehen ist, vorgelegt und fortlaufend gerührt. Innerhalb von 1,5 Stunden leitet man 6,7 kg Chlorwasserstoff in den Reaktor und kühlt die Reaktionsmischung so, daß ihre Temperatur unterhalb von 50°C bleibt. Danach wird die Mischung auf 70°C erhitzt und 5 Stunden bei dieser Temperatur gerührt und anschließend auf 30°C abgekühlt. Sobald diese Temperatur erreicht ist, fügt man portionsweise 2,2 kg 50 %iger wäßriger Natronlauge hinzu. Man erhält 108,9 kg einer wäßrigen Lösung des hydrolysierten Copolymerisats mit einem pH-Wert von 0,5. Diese Polymerlösung enthält 6,2 % Ameisensäure und 2,7 % Essigsäure. Der Hydrolysegrad der einpolymerisierten N-Vinylformamid-Einheiten beträgt 95 Mol-%, die Vinylacetat-Einheiten sind zu 90 Mol-% hydrolysiert.

Um die abgespaltenen Carbonsäuren aus der wäßrigen Lösung des hydrolysierten Copolymerisats zu entfernen, löst man darin 6,7 kg Methanol und speist die so erhaltene Lösung mit einer konstanten Zulaufgeschwindigkeit von 995 g/h in die Mitte einer Glockenbodenkolonne, die 260 cm lang ist, einen Durchmesser von 5 cm und 30 theoretische Böden aufweist. Der Rücklauf innerhalb der Kolonne, der im Idealfall 20 % des Zulaufs beträgt und damit das Temperaturprofil der Kolonne bestimmt, wird so eingestellt, daß die Temperatur im Sumpf der Kolonne 100 °C, die Temperatur an der Zulaufstelle 70°C und am Kopf der Kolonne 33 - 57°C beträgt. Am Kopf der Kolonne werden stündlich 108,7 g einer Mischung aus Ameisensäuremethylester und Essigsäuremethylester und am Sumpf der Kolonne stündlich 880,2 g wäßrige Polymerlösung ausgetragen, die noch 0,2 % Ameisensäure und 0,3 % Essigsäure enthält. Pro kg Lösung werden schließlich noch 440 g Wasser sowie 28 g 25 %ige wäßrige Natronlauge zugesetzt, wobei sich ein pH-Wert von 5,0 einstellt. Die Lösung hat einen Polymergehalt von 11,0 % und eine Viskosität von 1800 mPas (Brookfield, 20°C).

### Beispiel 3

### Anwendungstechnische Prüfungen

Die Prüfungen (a) - (c) sind Vergleichsbeispiele, (d) ist ein Beispiel gemäß Erfindung.

Aus 50 % Fichtensulfitzellstoff und 50 % Buchensulfitzellstoff wurde eine 0,5 %ige Stoffsuspension in Wasser hergestellt. Der pH-Wert der Stoffsuspension betrug 7,0, der Mahlgrad 30° Schopper-Riegler (SR). Die Stoffsuspension wurde anschließend in 4 gleiche Teile geteilt, von denen 2 der Stoffsuspensionen mit den unter b) und c) angegebenen Zusätzen versetzt wurden. Die 4 Stoffsuspensionen wurden anschließend zu Blättern einer Flächenmasse von 80 g/m² in einem Rapid-Köthen-Laborblattbildner verarbeitet.

Zusammensetzung der Stoffsuspensionen:
a) Die Stoffsuspension enthielt keine weiteren Zusätze.
b) Der Stoffsuspension wurde 0,5 %, bezogen auf die Faserstoffe, einer wäßrigen Lösung einer handelsüblichen Neutralnaßfestharzes auf der Basis eines Umsetzungsproduktes von Epichlorhydrin und einem Polyamidoamin aus Diethylentriamin und Adipinsäure zugesetzt.
c) Der Stoffsuspension wurde 0,5 % Polymer, bezogen auf trockenen Faserstoff, der nicht entsäuerten Polymerlösung 1 gemäß Beispiel 1 zugesetzt.
d) Der Stoffsuspension wurde 0,5 % Polymer, bezogen auf trockenen Faserstoff, der entsäuerten Polymerlösung 2 gemäß Beispiel 1 zugesetzt.

Aus den oben beschriebenen Papierstoffsuspensionen wurden die Blätter a) bis d) hergestellt. Von den erhaltenen Blättern wurde die Naßreißlänge gemessen. Die Messung wurde zunächst unmittelbar nach Herstellung der Polymerlösungen durchgeführt und dann nach einer Lagerzeit von 4 Monaten wiederholt. Die Ergebnisse sind in der Tabelle dargestellt.

**Tabelle**

| | | Naßreißlänge [m] unmittelbar nach Herstellung | | | Naßreißlänge [m] nach 4 Monaten Laufzeit | |
|---|---|---|---|---|---|---|
| Bsp. 3 | HG²⁾ [%] | ungealtert | gealtert¹⁾ | HG [%] | ungealtert | gealtert¹) 5 min 110°C |
| a) | - | 109 | 125 | | 146 | 146 |
| b) | - | 690 | 855 | - | 650 | 747 |
| c) | 95 | 755 | 812 | 82 | 605 | 611 |
| d) | 95 | 806 | 902 | 95 | 734 | 768 |

| | | | | | | |
|---|---|---|---|---|---|---|
| ¹) Zur Alterung wurden die Blätter 5 min auf 110°C erhitzt | | | | | | |
| ²⁾ HG = Hydrolysegrad, gemessen durch Polyelektrolyttitration | | | | | | |

## Patentansprüche

1. Verfahren zur Herstellung lagerstabiler wäßriger Lösungen von Vinylamin-Einheiten enthaltenden Polymerisaten durch Hydrolyse von N-Vinylcarbonamid-Einheiten enthaltenden Polymerisaten mit Säuren in wäßrigem Medium und Entfernen der aus den Polymerisaten abgespaltenen Carbonsäuren aus der wäßrigen Polymerisatlösung, dadurch gekennzeichnet, daß man N-Vinylformamid-Einheiten enthaltende Polymerisate einsetzt und die abgespaltene Ameisensäure im Anschluß an die Hydrolyse durch Zugabe von mindestens stöchiometrischen Mengen mindestens eines C₁- bis C₆-Alkohols verestert und die Ester aus dem Reaktionsgemisch abdestilliert, so daß wäßrige Polymerlösungen mit einem Gehalt an Neutralsalzen von höchstens 5 Gew.-% entstehen

2. Verfahren nach Anspruch 1, dadurch gekennzeichnet, daß man N-Vinylformamid-Einheiten enthaltende Homopolymerisate hydrolysiert.

3. Verfahren nach Anspruch 1, dadurch gekennzeichnet, daß man Copolymerisate hydrolysiert, die
(a) 5 bis 95 Mol-% N-Vinylformamid-Einheiten und
(b) 95 bis 5 Mol-% Einheiten mindestens eines Monomeren aus der Gruppe Vinylacetat, Vinylpropionat, N-Vinylpyrrolidon, Acrylsäure, Methacrylsäure, der Ester, Amide und Nitrile von Acrylsäure oder Methacrylsäure und der C₁ - bis C₄-Alkylvinylether
enthalten.

4. Verfahren nach einem der Ansprüche 1 bis 3, dadurch gekennzeichnet, daß man die abgespaltenen Carbonsäuren mit Methanol verestert.

5. Verfahren nach einem der Ansprüche 1 bis 4, dadurch gekennzeichnet, daß man das Reaktionsgemisch im Anschluß an die Hydrolyse und nach Zugabe mindestens eines Alkohols kontinuierlich in eine Destillationskolonne einspeist, die Carbonsäureester am Kopf der Kolonne und die wäßrige Polymerlösung aus dem Kolonnensumpf jeweils kontinuierlich entnimmt.

6. Verwendung der lagerstabilen, wäßrigen Lösungen von Vinylamin-Einheiten enthaltenden Polymeren nach den Ansprüchen 1 bis 5 als Trocken- und Naßverfestigungsmittel bei der Herstellung von Papier.

## Claims

1. A process for the preparation of an aqueous solution of a polymer containing vinylamine units, which solution has a long shelf life, by hydrolyzing a polymer containing N-vinylcarboxamide units with an acid in an aqueous medium and removing the carboxylic acid eliminated from the polymer from the aqueous polymer solution, wherein a polymer containing N-vinylformamide units is used and the eliminated formic acid is esterified by adding at least a stoichiometric amount of at least one C₁-C₆-alcohol after the hydrolysis, and the ester is distilled off from the reaction mixture, resulting in an aqueous polymer solution containing not more than 5 % by weight of neutral salts.

2. A process as claimed in claim 1, wherein a homopolymer containing N-vinylformamide units is hydrolyzed.

3. A process as claimed in claim 1, wherein a copolymer which contains
(a) from 5 to 95 mol% of N-vinylformamide units and
(b) from 95 to 5 mol% of units of at least one monomer selected from the group consisting of vinyl acetate, vinyl propionate, N-vinylpyrrolidone, acrylic acid, methacrylic acid, the esters, amides and nitriles of acrylic acid or methacrylic acid and the C₁-C₄-alkyl vinyl ethers
is hydrolyzed.

4. A process as claimed in any of claims 1 to 3, wherein the eliminated carboxylic acid is esterified with methanol.

5. A process as claimed in any of claims 1 to 4, wherein the reaction mixture is fed continuously into a distillation column after the hydrolysis and after the addition of at least one alcohol, the carboxylate is removed continuously at the top of the column and the aqueous polymer solution is removed continuously from the bottom of the column.

6. Use of an aqueous solution of a polymer containing vinylamine units, which solution has a long shelf life, as claimed in any of claims 1 to 5, as a dry or wet strength agent in papermaking.

## Revendications

1. Procédé de préparation de solutions aqueuses, stables au stockage, de polymères contenant des motifs vinylamine, par hydrolyse de polymères contenant des motifs N-vinylcarboxamide avec des acides en milieu aqueux, et élimination de la solution aqueuse de polymères des acides carboxyliques libérés par les polymères, caractérisé en ce que l'on ajoute des polymères contenant des motifs N-vinylformamide et on estérifie l'acide formique libéré à la suite de l'hydrolyse par addition de quantités au moins stoechiométriques d'au moins un alcool en C₁-C₆, et on élimine l'ester par distillation du mélange réactionnel, de sorte que les solutions aqueuses de polymères aient une teneur en sels neutres de 5 % en poids au plus.

2. Procédé selon la revendication 1, caractérisé en ce que l'on hydrolyse des homopolymères contenant des motifs N-vinylformamide.

3. Procédé selon la revendication 1, caractérisé en ce que l'on l'hydrolyse des copolymères qui contiennent
a) 5 à 95% en moles de motifs N-vinylformamide et
b) 95 à 5% en moles de motifs d'au moins un monomère choisi dans le groupe constitué par l'acétate de vinyle, le propionate de vinyle, la N-vinylpyrrolidone, l'acide acrylique, l'acide méthacrylique, les esters, amides et nitriles de l'acide acrylique ou de l'acide méthacrylique et les éthers de vinyle et d'alkyle en C₁-C₄.

4. Procédé selon l'une quelconque des revendications 1 à 3, caractérisé en ce que l'on estérifie avec du méthanol les acides carboxyliques libérés.

5. Procédé selon l'une quelconque des revendications 1 à 4. caractérisé en ce que l'on introduit de façon continue le mélange réactionnel dans une colonne de distillation, à la suite de l'hydrolyse et après l'addition d'au moins un alcool, et en ce que l'on extrait de façon continue l'ester d'acide carboxylique en tête de colonne et la solution aqueuse de polymères en fond de colonne.

6. Utilisation de solutions aqueuses, stables au stockage, de polymères contenant des motifs vinylamine, selon l'une quelconque des revendications 1 à 5, en tant qu'agent de renfort à l'état sec et à l'état humide pour la fabrication de papier.
